# FASCICULE DE BREVET EUROPEEN

(11) **EP 0 600 772 B1**
(45) Date de publication et mention de la délivrance du brevet: **05.02.1997**
(21) Numéro de dépôt: 93402864.8
(22) Date de dépôt: 26.11.1993
(51) Int. Cl.: B60B 37/10

(54) **Roue pour poussettes d'enfant**
Rad für Kinderwagen
Wheel for baby carriages

(30) Priorité: 30.11.1992 FR 9214387
(43) Date de publication de la demande: 08.06.1994
(73) Titulaire: MJ-FI SARL, F-49290 Chalonnes/Loire (FR)
(72) Inventeur: Bernier, Marc, F-49290 Chalonnes/Loire (FR)
(74) Mandataire: Dawidowicz, Armand

(56) Documents cités:
- EP-A- 0 180 307
- DE-A- 3 811 757
- FR-A- 2 554 057

## Description

La présente invention concerne une roue selon la première partie de la revendication 1.

Les roues constituées d'une jante, d'une bande de roulement et d'un moyeu doivent généralement venir se verrouiller sur un axe porteur ou essieu. Le verrouillage de la roue sur l'axe pose souvent un certain nombre de problèmes. Les moyens de verrouillage actuellement utilisés sont constitués par des butées disposées de chaque côté du moyeu ou par une épingle traversant le moyeu au droit d'une rainure réalisée sur l'axe, de manière à immobiliser le moyeu en translation latérale.

D'autres dispositifs également classiquement utilisés comprennent une pièce intermédiaire telle qu'un embout qui vient se placer sur, ou dans, l'axe de la roue et coopère avec ce dernier au moyen de saillies ou d'évidements qui viennent pénétrer respectivement dans les évidements ou saillies dudit axe de manière à permettre au moyen de cet embout la fixation d'un moyeu de roue.

Une telle construction est notamment décrite dans les brevets FR-A-2.629.318, FR-A-2.519.587, FR-A-2.554.057. Ces solutions nécessitent la fabrication de plusieurs pièces, et elles rendent souvent l'ensemble indémontable. En outre, elles exigent de l'axe ou du moyeu des spécificités qui ne rendent pas l'ensemble applicable à un grand nombre de roues.

Une dernière solution décrite dans le brevet EP-A-180.307, solution constituant l'état de la technique le plus proche de l'invention selon le préambule de la revendication 1 décrit un organe de verrouillage constitué par des moyens élastiquement déformables ménagés dans le corps du moyeu et qui coopèrent avec une rainure ménagée dans l'axe de la roue, ces moyens élastiquement déformables étant maintenus en contact de pression contre le fond de la rainure de l'axe au moyen d'un organe de verrouillage externe. Cette solution exige donc là encore un organe de verrouillage supplémentaire et entraîne, en raison de sa conception, une usure relativement importante des pièces.

Il en est de même du brevet DE-A-3.811.757. Ce brevet décrit un moyeu de roue constitué en un matériau non élastiquement déformable et qui nécessite la mise en oeuvre d'un organe de verrouillage intermédiaire pour assurer le verrouillage de l'axe porteur de roue sur ladite roue. Cet organe de verrouillage intermédiaire doit préalablement être positionné sur l'axe porteur de roue avant d'être introduit à l'intérieur du moyeu; ce qui enlève toute simplicité à l'invention et nécessite plusieurs manipulations.

Le but de la présente invention est de permettre le positionnement en translation latérale d'une roue sur un axe en se limitant à un assemblage qui peut être constitué uniquement de deux pièces, l'essieu solidaire ou non du châssis de la poussette et le moyeu solidaire du corps de la roue, tout en garantissant une tenue axiale parfaite de la roue par rapport à l'axe porteur ainsi qu'une suppression des bruits désagréables de flottement de la roue sur son axe.

Un autre but de l'invention est de réaliser une roue dont la fixation sur l'axe porteur est réversible rendant ainsi la roue démontable.

L'invention concerne à cet effet une roue, en particulier pour poussette, destinée à être montée à rotation sur un axe porteur de roue, du type comportant au voisinage de chacune de ses extrémités un renflement, cette roue comportant un moyeu cylindrique réalisé en un matériau élastiquement déformable, ledit moyen comportant sur ses parois au moins un doigt radial élastiquement déformable dont la face d'appui distale vient en butée mécanique sur l'épaulement radial interne du renflement de l'axe porteur de roue, caractérisée en ce que le doigt radial est rendu élastiquement déformable au moyen d'une gorge disposée à la base dudit doigt dans la zone de séparation ou de liaison avec le corps du moyeu, cette gorge définissant une zone de plus faible résistance permettant le pivotement radial externe dudit doigt lors de l'introduction du moyeu sur l'axe porteur de roue.

D'autres caractéristiques et avantages de l'invention apparaîtront encore à la lecture de la description qui suit et des dessins joints, lesquels description et dessins sont donnés surtout à titre d'exemple. Dans ces dessins :
la figure 1 représente une vue en coupe d'une roue conforme à l'invention et

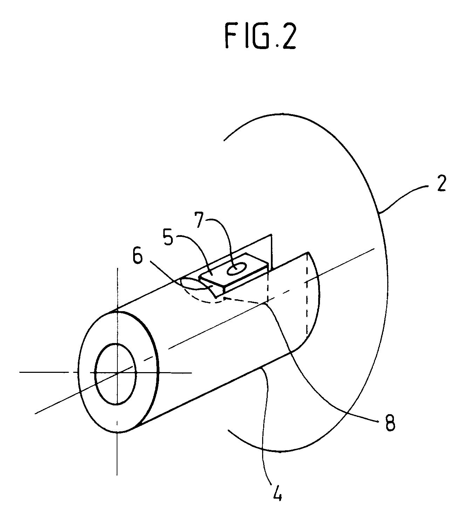

la figure 2 représente une vue en perspective d'un moyeu de roue conforme à l'invention.

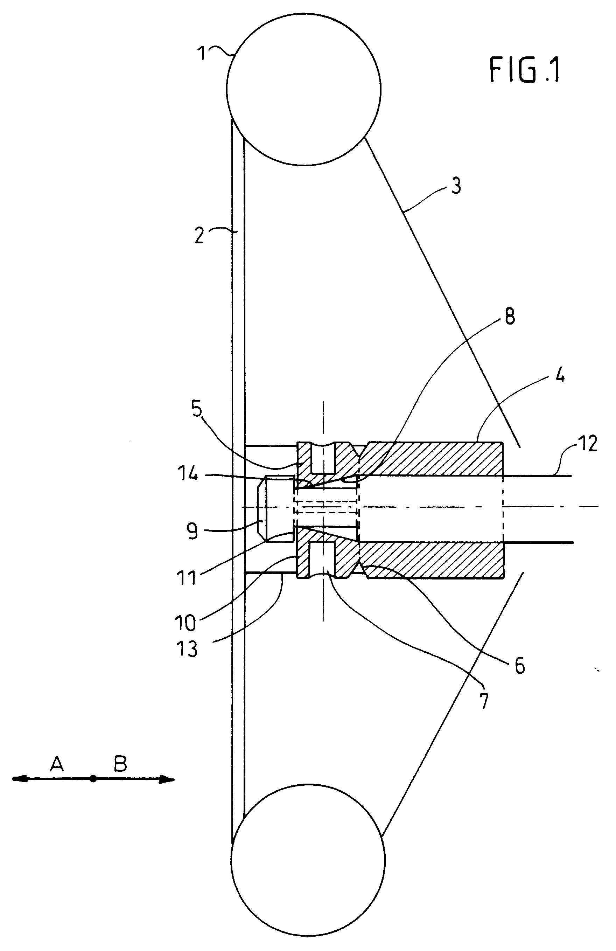

La roue selon l'invention comporte une jante 2, 3, un moyeu 4, un axe métallique 12 venant s'encliqueter dans le moyeu 4 et une bande de roulement ou pneu 1. La jante et le bandage entourant cette dernière sont réalisés en des matériaux plastiques bien connus compatibles de manière à assurer une parfaite adhérence entre les matériaux sans risque de séparation entre la jante et son bandage. Le bandage est en un matériau souple qui supprime les bruits de roulement. L'axe 12 est, quant à lui, un axe de préférence métallique, traité si possible anti-corrosion, comportant à chacune des ses extrémités une gorge torique 14 prolongée par une tête 9. Cette tête ou collerette 9 constitue un renflement qui peut être de forme quelconque. Dans l'exemple représenté à la figure 1, il affecte une forme tronconique facilitant l'introduction de l'axe à l'intérieur du moyeu 4. Quant à la gorge 14, elle peut être à fond plat ou au contraire conique à faces divergentes de l'extrémité en forme de champignon 9 constituant la tête de l'axe vers le reste du corps de l'axe.

Le moyeu 4 est quant à lui réalisé en un matériau plastique qui permet un frottement de rotation de la roue sur ledit axe. Ce matériau doit donc être suffisamment résistant. Ce moyeu comporte à l'une de ses extrémités, réalisé d'une seule pièce par moulage avec le corps du moyeu, au moins un doigt radial 5 élastiquement déformable dont la face d'appui distale 10 vient en butée mécanique sur l'épaulement radial interne 11 du renflement ou tête 9 de l'axe porteur de roue 12 de manière à verrouiller la roue sur l'axe dans le sens de la flèche A éliminant ainsi tout risque de sortie ou de démontage intempestif de la roue de l'axe 12, en particulier lorsque ce dernier est monté fixe sur le châssis de l'objet devant être équipé de ce type de roue. Ce doigt radial élastiquement déformable est réalisé de manière à assurer un léger serrage constant et permanent du moyeu sur l'axe 12. On évite ainsi les bruits désagréables liés au flottement de la roue sur son axe. En raison des dimensions de la tête 9 de l'axe qui sont nécessaires pour permettre un blocage de la roue sur l'axe, il est nécessaire que le ou les doigts radiaux puissent être écartés de manière importante de l'axe longitudinal médian du moyeu. Pour ce faire, chaque doigt est rendu élastiquement déformable au moyen d'une gorge 6 disposée à la base dudit doigt dans la zone de liaison avec le corps du moyeu, cette gorge 6 définissant une zone de faible résistance permettant le pivotement radial externe dudit doigt lors de l'introduction de la roue sur l'axe porteur. La variation de profondeur de cette gorge 6 influe sur l'élasticité et la capacité à la flexion de ce doigt 6. Les doigts radiaux élastiquement déformables peuvent être en un nombre quelconque et disposés de manière indifférente. En outre, ils peuvent également avoir une face interne de forme quelconque.

Dans l'exemple représenté à la figure 1, ces doigts radiaux s'apparentent à des dents de rochet dont la face interne vient en appui sur le fond de la gorge 14 ménagée sur l'axe 12. Dans le cas de dents de rochet, cette face interne est biseautée. On peut imaginer que le fond de la gorge 14 ménagée sur l'axe 12 soit également biseauté, c'est-à-dire à allure divergente de la tête 9 vers le reste du corps. Ces doigts élastiquement radiaux élastiquement déformables ou dents de rochet peuvent être disposés diamétralement opposés comme c'est le cas dans la figure 1. Ces doigts ou dents peuvent être au nombre de deux, de trois, de quatre ou plus.

Les doigts élastiquement déformables 5 sont équipés d'organes de désaccouplement 7 de manière à permettre le démontage de la roue lorsque cela est nécessaire, notamment lorsqu'elle est usée. Ces organes de désaccouplement sont constitués, dans l'exemple de la figure 1, par des perçages 7 de manière à utiliser les doigts comme des bras de levier lorsqu'on introduit des pinces ou outils appropriés à l'intérieur de ces perçages. Dans ce cas, on exerce, au moyen d'outils de traction, une force dans le sens de la flèche B sur les doigts exerçant ainsi un couple de pivotement qui permet un dégagement radial dans le sens externe et libère la roue de l'axe. Ces perçages 7 peuvent bien évidemment être remplacés par d'autres organes d'accouplement tels que des éléments en saillie du type oreille ou autre. Pour éviter un déplacement axial de la roue sur l'axe 12 dans le sens B, il est nécessaire de fermer l'extrémité du moyeu au moyen d'un flasque 2. Ce flasque peut constituer le voile de jante et peut être dans ce cas moulé d'une seule pièce avec ledit moyeu et être solidarisé à ce dernier par la paroi 13 de liaison. Ce voile de jante 2 peut en outre être renforcé par des nervures 3, l'ensemble étant là encore susceptible d'être moulé d'une seule pièce. On peut de ce fait arriver à une roue moulée d'une seule pièce composée de son moyeu monobloc 4, de sa jante 2 et du bandage 1. La roue devient alors encliquetable sur son axe sans nécessiter l'adjonction d'une bague ou d'un autre artifice et ce de manière instantanée, en assurant une fixité axiale parfaite. Malgré tout, cet ensemble reste démontable.

On peut également imaginer, dans un autre mode de réalisation de l'invention, que le flasque 2 soit rapporté sur le moyeu 4 par des moyens de liaison appropriés puis que l'ensemble vienne se fixer sur une jante de roue.

Lors de l'introduction et du coulissement du moyeu sur l'axe par positionnement de la roue sur ledit axe, on constate les déformations suivantes. La tête d'axe 9 de forme tronconique coulisse dans un premier temps contre les faces internes 8 biseautées des dents de rochet 5 ou doigts radiaux élastiquement déformables. En écartant progressivement ces dents 5, cet écartement ayant été rendu possible au moyen des gorges 6 disposées à la base des doigts, sous l'action de l'introduction de l'axe, on force les dents de rochet à pivoter autour de cette gorge 6 dans un sens radial externe. Lorsque la roue est suffisamment enfoncée, la tête d'axe 9 fait saillie hors dudit moyeu 4 et les dents de rochet 5 viennent alors se placer en contact de pression permanent contre le fond de la gorge 14 ménagée sur ledit axe. La face distale 10 de la dent de rochet vient alors en butée contre la face radiale interne constituant un épaulement 11 de la tête d'axe 9. De ce fait, une extraction de la roue dans le sens A devient impossible. Quant à l'introduction de la roue et à son déplacement dans le sens B, il est limité par le flasque 2 qui vient en appui sur la face supérieure plane de la tête d'axe 9.

Grâce à cette configuration dans laquelle le voile de jante 2 est parfaitement plan et exempt d'orifices, ce voile de jante peut constituer l'enjoliveur et porter directement la décoration de la roue, ce qui constitue un avantage par rapport aux roues classiques.

## Revendications

1. Roue en particulier pour poussette, destinée à être montée à rotation sur un axe (12) porteur de roue, du type comportant au voisinage de chacune de ses extrémités un renflement (9), cette roue comportant un moyeu cylindrique (4) réalisé en un matériau élastiquement déformable, ledit moyen comportant sur ses parois au moins un doigt radial (5) élastiquement déformable dont la face d'appui distale (10) vient en butée mécanique sur l'épaulement radial interne (11) du renflement (9) de l'axe porteur (12) de roue,
caractérisée en ce que le doigt radial (5) est rendu élastiquement déformable au moyen d'une gorge (6) disposée à la base dudit doigt dans la zone de séparation ou de liaison avec le corps du moyeu (4), cette gorge (6) définissant une zone de plus faible résistance permettant le pivotement radial externe dudit doigt (5) lors de l'introduction du moyeu (4) sur l'axe porteur de roue (12).

2. Roue selon la revendication 1,
caractérisée en ce que le doigt radial (5) affecte la forme d'une dent de rochet.

3. Roue selon l'une des revendications 1 et 2,
caractérisée en ce que le moyeu (4) comporte au moins deux dents de rochet (5) disposées diamétralement opposées.

4. Roue selon l'une des revendications 1 à 3,
caractérisée en ce que le renflement (9) de l'axe porteur de roue (12) affecte une forme tronconique constituant une tête sensiblement en forme de champignon.

5. Roue selon l'une des revendications 1 à 4,
caractérisée en ce que le moyeu (4) est fermé à son extrémité opposée à celle servant à l'introduction du moyeu (4) sur l'axe porteur de roue (12) par un flasque (2) limitant le déplacement de la roue dans le sens d'introduction de la roue sur l'axe porteur de roue (12).

6. Roue selon l'une des revendications 1 à 5,
caractérisée en ce que le flasque (2) constitue le voile de jante de ladite roue.

7. Roue selon l'une des revendications 1 à 6,
caractérisée en ce que ledit voile de jante est renforcé par des nervures (3), l'ensemble constituant la jante de la roue.

8. Roue selon l'une des revendications 1 à 7,
caractérisée en ce que le moyeu (4), la jante (2, 3) et éventuellement le bandage (1) de la roue sont moulés d'une seule pièce.

9. Roue selon l'une des revendications 1 à 8,
caractérisée en ce que les doigts radiaux élastiquement déformables (5) du moyeu (4) sont équipés d'organes de désaccouplement tels que des perçages (7) qui, lorsqu'ils sont soumis à une traction dans un sens identique à celui d'introduction de la roue sur ledit axe, constituent des bras de levier qui exercent un couple de pivotement sur les doigts, ce qui permet un dégagement radial des doigts dans le sens externe et libère ainsi la roue de l'axe porteur (12).

## Claims

1. Wheel in particular for a baby carriage, intended to be rotatably mounted on a wheel-carrying axle (12), of the type comprising a widened portion (9) in the proximity of each of its ends, this wheel comprising a cylindrical hub (4) produced of an elastically deformable material, the said hub comprising on its walls at least one elastically deformable radial projection (5) of which the distal bearing face (10) comes into mechanical abutment on the radial inner shoulder (11) of the widened portion (9) of the carrying axle (12) of the wheel, characterised in that the radial projection (5) is rendered elastically deformable by means of a groove (6) disposed at the base of the said projection in the zone of separation or connection to the body of the hub (4), this groove (6) defining a weaker zone permitting the radial outward pivoting of the said projection (5) during introduction of the hub (4) onto the carrier axle (12) of the wheel.

2. Wheel according to claim 1, characterised in that the radial projection (5) is in the form of a ratchet tooth.

3. Wheel according to one of claims 1 and 2, characterised in that the hub (4) comprises at least two diametrically oppositely disposed ratchet teeth (5).

4. Wheel according to one of claims 1 to 3, characterised in that the widened portion (9) of the carrier axle (12) of the wheel is of a truncated shape comprising a substantially mushroom-shaped head.

5. Wheel according to one of claims 1 to 4, characterised in that the hub (4) is closed at its end opposite to that serving for introduction of the hub (4) onto the carrier axle (12) of the wheel by a wheel cover (2) limiting the movement of the wheel in the direction in which the wheel is introduced onto the carrier axle (12) of the wheel.

6. Wheel according to one of claims 1 to 5, characterised in that the wheel cover (2) constitutes the lateral run-out of the said wheel.

7. Wheel according one of claims 1 to 6, characterised in that the said lateral run-out is reinforced by ribs (3), the whole constituting the wheel rim.

8. Wheel according to one of claims 1 to 7, characterised in that the hub (4), the wheel rim (2, 3) and possibly the tyre (1) of the wheel are moulded as a single piece.

9. Wheel according to one of claims 1 to 8 , characterised in that the said elastically deformable radial projections (5) of the hub (4) are equipped with decoupling members such as apertures (7) which, when subjected to a traction in a direction identical to that in which the wheel is introduced onto the said axle, constitute lever arms which exert a pivoting moment on the projections, which enables the projections to be disengaged radially in the outward direction and thus releases the wheel from the carrier axle (12).

## Patentansprüche

1. Rad, insbesondere für Kinderwagen, für die drehende Lagerung an einer Radachse (12), die in der Nähe jedes ihrer Enden eine Ausbauchung (9) aufweist, wobei dieses Rad eine zylindrische Nabe (4) umfaßt, die aus einem elastisch verformbaren Material besteht, wobei die besagte Nabe an ihren Wänden wenigstens einen elastisch verformbaren radialen Finger (5) umfaßt, dessen distale Auflagefläche (11) mechanisch an der radialen Innenschulter (11) der Ausbauchung (9) der Radachse (12) zum Anschlag kommt, **dadurch gekennzeichnet,** daß die elastische Verformbarkeit des radialen Fingers (5) mittels einer Auskehlung (6) herbeigeführt wird, die an der Grundfläche des besagten Fingers im Trenn- oder Verbindungsbereich mit dem Körper der Nabe (4) angeordnet ist, wobei diese Auskehlung (6) einen Bereich mit geringerer Festigkeit bildet, der die radiale Außenschwenkung des besagten Fingers (5) beim Einsetzen der Nabe (4) auf der Radachse (12) ermöglicht.

2. Rad nach Anspruch 1, **dadurch gekennzeichnet,** daß der radiale Finger (5) die Form eines Sperrzahns aufweist.

3. Rad nach einem der Ansprüche 1 und 2, **dadurch gekennzeichnet,** daß die Nabe (4) wenigstens zwei Sperrzähne (5) aufweist, die diametral gegenüberliegend angeordnet sind.

4. Rad nach einem der Ansprüche 1 bis 3, **dadurch gekennzeichnet,** daß die Ausbauchung (9) der Radachse (12) eine kegelstumpfartige Form aufweist, die einen in etwa pilzförmigen Kopf bildet.

5. Rad nach einem der Ansprüche 1 bis 4, **dadurch gekennzeichnet,** daß die Nabe (4) an ihrem Ende, das dem Ende für das Einsetzen der Nabe (4) auf der Radachse (12) gegenüberliegt, durch eine Scheibe (2) verschlossen wird, welche die Verschiebung des Rads in der Einsetzrichtung des Rads auf der Radachse (12) begrenzt.

6. Rad nach einem der Ansprüche 1 bis 5, **dadurch gekennzeichnet,** daß die Scheibe (2) den Felgenflansch des besagten Rads bildet.

7. Rad nach einem der Ansprüche 1 bis 6, **dadurch gekennzeichnet,** daß der besagte Felgenflansch durch Rippen (3) verstärkt ist, wobei diese Baueinheit die Radfelge bildet.

8. Rad nach einem der Ansprüche 1 bis 7, **dadurch gekennzeichnet,** daß die Nabe (4), die Felge (2, 3) und gegebenenfalls die Bereifung (1) des Rads einstückig geformt sind.

9. Rad nach einem der Ansprüche 1 bis 8, **dadurch gekennzeichnet,** daß die elastisch verformbaren radialen Finger (5) der Nabe (4) mit Trennorganen, etwa Bohrungen (7), versehen sind, die, wenn sie einer Zugbeanspruchung in einer Richtung ausgesetzt sind, die mit der Richtung für das Einsetzen des Rads auf der besagten Achse identisch ist, Hebelarme bilden, die ein Schwenkmoment auf die Finger ausüben, wodurch ein radiales Ausrücken der Finger nach außen und damit die Freigabe des Rads von der Radachse (12) ermöglicht wird.
